# EUROPÄISCHE PATENTSCHRIFT

(11) **EP 1 894 961 B1**
(45) Veröffentlichungstag und Bekanntmachung des Hinweises auf die Patenterteilung: **03.12.2008**
(21) Anmeldenummer: 07113291.4
(22) Anmeldetag: 27.07.2007
(51) Int. Cl.: C08G 77/00, C08G 77/46, D06M 15/647

(54) **Silicon-Blockcopolymere gepfropft mit ungesättigten Monomeren**
Silicon-polyoxyalkene-blockcopolymers grafted with unsaturated monomers
Polymères de bloc silicone polyoxyalkylène greffés par des monomères insaturés

(30) Priorität: 01.09.2006 DE 102006041088
(43) Veröffentlichungstag der Anmeldung: 05.03.2008
(73) Patentinhaber: Evonik Goldschmidt GmbH, 45127 Essen (DE)
(72) Erfinder: Schwab, Peter, 45133, Essen (DE); Favresse, Philippe, 40878 Ratingen (DE); Maurer, Tobias, 42551 Velbert (DE); Pascaly, Matthias, 48163 Münster (DE)

(56) Entgegenhaltungen:
- EP-A- 0 408 311
- EP-A- 1 801 136
- US-A- 3 471 588

## Beschreibung

Die Erfindung beschreibt neue siliconhaltige Pfropfmischpolymere und Verfahren zu deren Herstellung. Insbesondere bezieht sie sich auf siliconhaltige Pfropfmischpolymere P, die durch Aufpfropfen von olefinischen Monomeren M auf polyetherhaltige Reste von Polyoxyalkylen-Polysiloxan-Blockmischpolymerisaten S mit (AB)ₙ-Struktur erhalten werden.

In den letzten Jahrzehnten haben sich industriell erzeugte Silicone zu einer bedeutenden und vielfältigen Produktgruppe entwickelt, die in fast allen Industriesektoren eine wichtige Rolle spielt und sich durch stetes Wachstum auszeichnet. Besonders die organomodifizierten Silicone haben durch ihre vielfältigen Gestaltungsmöglichkeiten dazu beigetragen, eine große Mannigfaltigkeit von Produkttypen zu ermöglichen und damit eine Vielzahl von Anwendungen zu erschließen.

Aufgrund der großen wirtschaftlichen Bedeutung ist eine Reihe von Methoden entwickelt worden, um derartige organomodifizierte Siloxane herzustellen. Dazu ist eine Verknüpfung von radikalischer Polymerisation und Siliconchemie aus vielerlei Hinsicht erstrebenswert. Die Vorteile der radikalischen Polymerisation liegen in der Vielzahl der einsetzbaren, auch in industriellem Maßstab verfügbaren Monomere, in der hohen Toleranz gegenüber funktionellen Gruppen, einschließlich Carboxyl-, Hydroxyl-, Amino- und Epoxy-Funktionen, im relativ geringen experimentellen Aufwand und den milden sowie unempfindlichen Reaktionsbedingungen. Allerdings ist das direkte Aufpfropfen organischer Olefine auf Dialkylsiloxane trotz Offenbarung in der Literatur aus thermodynamischer Sicht und aufgrund mangelnder Verträglichkeiten sehr ungünstig und führt überwiegend zur Bildung von Homopolymeren ohne chemische Bindung an den Siloxanrücken.

Als Pfropfgrundlage eignen sich aber sehr wohl mit Polyether modifizierte Silicone, da die Ethergruppen durch Radikale erheblich leichter angreifbar sind. Somit können auf ethylenoxid- und besser noch propylenoxidhaltigen Polyethersiloxanen durch Wasserstoffabstraktion Radikale erzeugt werden, von denen aus durch Addition an entsprechende vinylische Monomere eine Polymerkette gepfropft werden kann. Dies wird in DE-A-1 645 569 für kammartige Strukturen beschrieben. Kammartige Strukturen neigen aber beim radikalischen Pfropfprozess zum Vergelen bzw. ergeben höher viskose Produkte, die in vielen Anwendungen unerwünscht sind.

Aufgabe der vorliegenden Erfindung ist es daher, durch Pfropfen von blockweise aufgebauten Polyoxyalkylen-Polysiloxan-Mischpolymerisaten mit ethylenisch ungesättigten Monomeren Produkte mit neuen Eigenschaften herzustellen.

Überraschenderweise wurde nun gefunden, dass die Verwendung von blockweise aufgebauten (AB)ₙ-Strukturen als Pfropfgrundlage in besonderer Weise anwendungstechnische Probleme lösen kann.

Gegenstand der vorliegenden Erfindung sind deshalb Pfropfmischpolymerisate P, auf Basis von Polyoxyalkylen-Polysiloxan-Blockmischpolymerenen S, der allgemeinen Formel (V) 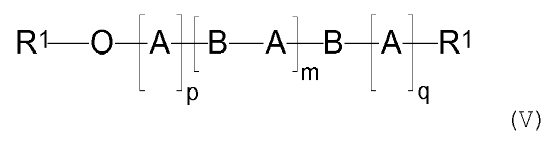 wobei der Rest
A ein Polyoxyalkylenblock der durchschnittlichen Formel (VI) ist,

   [(C₂H_{4-d}R'_{d}O)ₙ(CₓH₂ₓO)ᵣ(C₂H_{4-d}R"_{d}O)ₜ] (VI)

   wobei
   - d: 1 bis 3,
   - n: ≥ 0,
   - x: 2 bis 10,
   - r: ≥ 0,
   - t: ≥ 0,

   n + r + t ≥ 1,

   sind und
   - R': ein einwertiger aromatischer, gegebenenfalls substituierter Kohlenwasserstoffrest,
   - R": ein Wasserstoffrest oder ein einwertiger Kohlenwasserstoffrest mit 1 bis 18 C-Atomen,
   - R¹: ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters, ist,
B ein Polysiloxanblock der durchschnittlichen Formel (VII) ist, 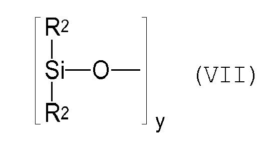 wobei
   - R²: gleich oder verschieden ist und einen Alkylrest mit 1 bis 4 Kohlenstoffatomen oder einen Phenylrest umfasst und
   - y: einen Wert von 5 bis 200,
   - m: einen Wert von 2 bis 100,
   - p: einen Wert von 0 bis 1 und
   - q: einen Wert von 0 bis 1,
   hat,
   oder der Formel (VIII) 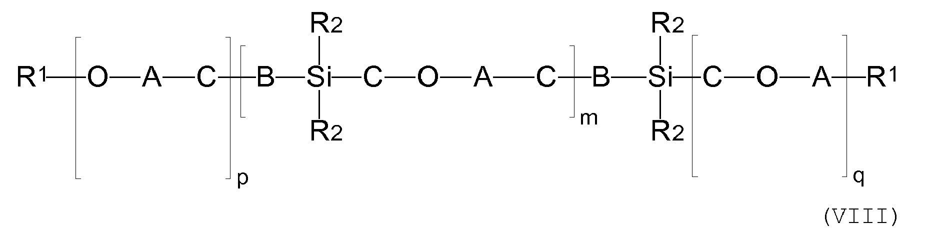 wobei die Reste R¹, A, B und m, p und q die oben genannte Bedeutung haben und
   C ein linearer oder verzweigter Alkylenrest mit 2 bis 20 Kohlenstoffatomen ist.

Vorzugsweise sind die erfindungsgemäßen Pfropfmischpolymerisate P solche, die durch radikalische Pfropf-Polymerisation von ethylenisch ungesättigten Monomeren M in Gegenwart von Polyoxyalkylen-Polysiloxan-Blockmischpolymeren der Formeln (V) oder (VIII) wie oben definierten hergestellt werden können.

Die hergestellten gepfropften blockweise aufgebauten Polyethersiloxane P eignen sich für verschiedenste Anwendungen, in denen organisch modifizierte Polyethersiloxane eingesetzt werden. Sie können gegenüber gepfropften kammartigen Polyethersiloxanen signifikante Eigenschaftsverbesserungen aufweisen. Die vorteilhaften Eigenschaften der erfindungsgemässen Polymere führen im Textilbereich zu der erwünschten Eigenschaft als hydrophiler Weichmacher. Die Produkte zeigen eine sehr gute Emulgier/Dispergierbarkeit und eine entsprechend gute Emulsions/Dispersionsstabilität, die für einen Einsatz als Textilhilfsmittel von Vorteil sind. Zusätzlich zeigen die Produkte niedrigere Viskositäten bei ähnlichen Pfropfdichten, die zu einer einfacheren Verarbeitung führen.

Für die Herstellung der erfindungsgemäßen gepfropften Mischpolymere P kommen prinzipiell zwei Verfahren in Frage. Beim ersten Verfahren werden die Polyoxyalkylen-Polysiloxan-Blockmischpolymere vor dem Pfropfschritt hergestellt, beim zweiten Verfahren werden zuerst die Polyether gepfropft und danach die gepropften Polyether mit den entsprechenden Siloxanen zu erfindungsgemäßen, gepfropften Polyethersiloxanen P umgesetzt. Die erfindungsgemäßen Produkte können nach beiden Verfahren so hergestellt werden, dass sie nicht zu unterscheiden sind.

Jegliche monomere, ethylenisch ungesättigte Verbindung und jegliches polymeres Olefin mit mindestens einem Rest an Ungesättigtkeit (wie Polymere des Butadiens oder Isoprens oder jegliche Art von Macromonomeren, einschließlich solcher die Siloxanketten enthalten), sind zur Herstellung der erfindungsgemäßen Pfropfmischpolymere geeignet.

Der Begriff ethylenisch ungesättigt bedeutet, dass die Monomere M zumindest eine polymerisierbare Kohlenstoff-Kohlenstoff-Doppelbindung besitzen, die mono-, di-, tri-, oder tetrasubstituiert sein kann.

Die bevorzugten ethylenisch ungesättigten Monomere M können durch die folgende allgemeine Formel (I) beschrieben werden:

X-C (O) CR⁷=CHR⁶ (I)

wobei
- X: ausgewählt ist aus der Gruppe der Reste -OH, -OL, -OR⁸, NH₂, NHR⁸, N(R⁸)₂,
- R⁷ und R⁶: unabhängig voneinander sind, ausgewählt aus der Gruppe bestehend aus: -H, C₁-C₈-linear- oder verzweigtkettige Alkylketten, Methoxy, Ethoxy, 2-Hydroxyethoxy, 2-Methoxyethoxy und 2-Ethoxyethyl, die Reste
- R⁸: können identisch oder verschieden ausgewählt werden aus der Gruppe bestehend aus C₁-C₄₀-linearen, C₃-C₄₀-verzweigtkettigen, aromatischen oder C₃-C₄₀-carbocyclischen Alkylresten, C₆-C₁₂-mehrfachfunktionellen Alkoholen mit 2 bis 10 Hydroxylgruppen wie Ethylenglycol, Hexylenglycol, Glycerin, und 1,2,6-Hexantriol, von Alkoholethern wie Methoxyethanol und Ethoxyethanol oder Polyethylenglykolen,
- L: ein Kation ist, ausgewählt aus der Gruppe bestehend aus: Na⁺, K⁺, Mg⁺⁺, Ca⁺⁺, Zn⁺⁺, NH₄⁺, Alkylammonium, Dialkylammonium, Trialkylammonium, Tetraalkylammonium und die entsprechenden Phosphoniumderivate.

Beispiele von geeigneten Monomeren sind Ester und Amide.

Die Ester können abgeleitet sein von C₁-C₄₀-linearen, C₃-C₄₀-verzweigtkettigen, oder C₃-C₄₀-carbocyclischen Alkoholen, von mehrfachfunktionellen Alkoholen mit 2 bis etwa 10 Hydroxylgruppen wie Ethylenglycol, Hexylenglycol, Glycerin und 1,2,6-Hexantriol, von Aminoalkoholen oder von Alkoholethern wie Methoxyethanol und Ethoxyethanol oder Polyethylenglykolen.

Besonders vorteilhaft hat sich die Verwendung von Monomeren M herausgestellt, die als Copolymerisate aus insbesondere Ethylacrylat, Methylacrylat, Hydroxyethylacrylat, n-Butylacrylat, Laurylacrylat, Ethylmethacrylat, Methylmethacrylat, Hydroxyethylmethacrylat, n-Butylmethacrylat und Laurylmethacrylat, bestehen.

Ferner eignen sich N,N-Dialkylaminoalkylacrylate und -methacrylate und N-Dialkylaminoalkylacryl- und -Methacrylamide der allgemeinen Formel (II) 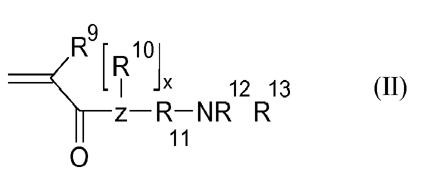 mit
- R⁹: H, Alkyl mit 1 bis 8 C-Atomen,
- R¹⁰: H, Methyl,
- R¹¹: Alkylen mit 1 bis 24 C-Atomen, optional substituiert durch Alkyl,
- R¹², R¹³: C₁-C₄₀-Alkylrest,
- Z: Stickstoff,
- x: 1 oder Sauerstoff für x = 0.

Die Amide können unsubstituiert, N-alkyl oder N-alkylamino monosubstituiert, oder N,N-dialkylsubstituiert oder N,N-dialkylamino disubstituiert sein, worin die Alkyl- oder Alkylaminogruppen von C₁-C₄₀-linearen, C₃-C₄₀-verzweigtkettigen, oder C₃-C₄₀-carbocyclischen Einheiten abgeleitet sind.

Bevorzugte Monomere der Formel (II) sind N,N-Dimethylaminomethyl(meth)acrylat, N,N-Diethylaminomethyl(meth)acrylat, N,N-Dimethylaminoethyl(meth)acrylat, N,N-Diethylaminoethyl(meth)acrylat und N,N-Dimethylaminopropyl(meth)acrylat.

Ebenfalls verwendbare Monomere sind substituierte Acrylsäuren sowie Salze, Ester und Amide davon, wobei die Substituenten an den Kohlenstoffatomen in der zweiten oder dritten Position der Acrylsäure stehen und unabhängig voneinander ausgewählt sind aus der Gruppe bestehend aus C₁-C₄-Alkyl, -CN, COOH besonders bevorzugt Methacrylsäure-, Ethacrylsäure- und 3-Cyanoacrylsäurederivate. Diese Salze, Ester und Amide dieser substituierten Acrylsäuren können wie oben für die Salze, Ester und Amide der Acrylsäure beschrieben, ausgewählt werden.

Andere geeignete Monomere sind Vinyl- und Allylester von C₁-C₄₀-linearen, C₃-C₄₀-verzweigtkettigen oder C₃-C₄₀-carbocyclische Carbonsäuren (z.B.: Vinylacetat, Vinylpropionat, Vinylneononanoat, Vinylneoundekanoat oder t-Butyl-benzoesäure-vinylester), Vinyl- oder Allylhalogenide, bevorzugt Vinylchlorid und Allylchlorid, Vinylether, bevorzugt Methyl-, Ethyl-, Butyl-, oder Dodecylvinylether, Vinylformamid, Vinylmethylacetamid, Vinylamin, Vinyllactame, bevorzugt Vinylpyrrolidon und Vinylcaprolactam, Vinyl- oder Allyl-substituierte heterocyclische Verbindungen, bevorzugt Vinylpyridin, Vinyloxazolin und Allylpyridin.

Weiterhin sind N-Vinylimidazole der allgemeinen Formel (III) geeignet, worin R¹⁴ bis R¹⁶ unabhängig voneinander für Wasserstoff, C₁-C₈-Alkyl oder Phenyl steht:

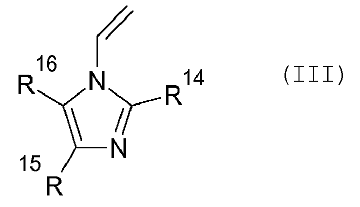

Weitere geeignete Monomere sind Diallylamine der allgemeinen Formel (IV) 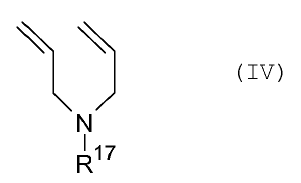 mit
- R^{l7}: C₁₋C₂₄-Alkyl.

Als weitere geeignete Monomere M können Vinylidenchlorid und Kohlenwasserstoffe mit mindestens einer Kohlenstoff-Kohlenstoff-Doppelbindung, bevorzugt Styrol, alpha-Methylstyrol, tert.-Butylstyrol, Styrolsulfonat, Butadien, Isopren, Cyclohexadien, Ethylen, Propylen, 1-Buten, 2-Buten, Isobutylen, Vinyttoluol, sowie Gemische dieser Monomere eingesetzt werden.

Des Weiteren sind als Monomere oder Comonomere geeignet Maleinsäure, Fumarsäure, Maleinsäureanhydrid und seine Halbester, Itaconsäure, Crotonsäure, Diallyldimethylammoniumchlorid, Vinylether und Vinylfuran.

Alle Monomere M, die ein basisches Stickstoffatom enthalten, können vor oder nach der Polymerisation quaternisiert werden. Zur Quaternisierung können Alkylhalogenide, Dialkylsulfate, Dialkylcarbonate und andere Quaternisierungsmittel nach dem Stand der Technik eingesetzt werden. Die Quaternisierung kann auch mit Alkylenoxiden, wie z.B. Ethylenoxid, in Gegenwart von Brönstedsäuren erreicht werden. Bevorzugte Quaternierungsmittel sind Methylchlorid, Dimethylsulfat oder Diethylsulfat.

Zusätzlich zu den oben genannten Monomeren können als Monomere sogenannte Makromonomere wie zum Beispiel siliconhaltige Makromonomere mit ein oder mehreren radikalisch polymerisierbaren Gruppen oder Alkyloxazolinmakromonomere, eingesetzt werden, wie sie zum Beispiel in der EP-A-408 311 beschrieben sind.

Des Weiteren können fluorhaltige Monomere, wie sie beispielsweise in der EP-B-558 423 beschrieben sind, vernetzend wirkende oder das Molekulargewicht regelnde Verbindungen in Kombination oder alleine eingesetzt werden.

Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen die regelnd auf das Molekulargewicht der erhaltenen Polymerisate wirken, verwendet werden. Es können gegebenenfalls auch thiolgruppenhaltige Siliconverbindungen eingesetzt werden. Bevorzugt werden aber siliconfreie Regler eingesetzt und die Synthesebedinungen so eingestellt, dass keine Regler verwendet werden müssen.

Als vernetzende Monomere können Verbindungen mit mindestens zwei ethylenisch ungesättigten Doppelbindungen eingesetzt werden wie zum Beispiel Ester von ethylenisch ungesättigten Carbonsäuren, wie Acrylsäure oder Methacrylsäure und mehrwertigen Alkoholen, Ether von mindestens zweiwertigen Alkoholen wie zum Beispiel Vinylether oder Allylether. Außerdem geeignet sind geradkettige oder verzweigte, lineare oder cyclische aliphatische oder aromatische Kohlenwasserstoffe, die aber mindestens zwei Doppelbindungen vertragen, welche bei den aliphatischen Kohlenwasserstoffen nicht konjugiert sein dürfen. Ferner geeignet sind Amide der Acryl- und Methacrylsäure und N-Allylamine von mindestens zweiwertigen Aminen wie zum Beispiel (1,2-Diaminoethan, 1,3-Diaminopropan). Ferner geeignet sind Triallylamin oder entsprechende Ammoniumsalze, N-Vinylverbindungen von Harnstoffderivaten, mindestens zweiwertigen Amiden, Cyanuraten oder Urethanen. Weitere geeignete Vernetzer sind Divinyldioxan, Tetraallylsilan oder Tetravinylsilan.

Besonders bevorzugte Vernetzer sind beispielsweise Methylenbisacrylamid, Triallylamin und Triallylammoniumsalze, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder mehrwertigen Alkoholen die mit Ethylenoxid und/oder Propylenoxid und/oder Epichlorhydrin umgesetzt worden sind. Wie dem Fachmann geläufig ist, können aber die Molekulargewichte so eingestellt werden, dass keine Vernetzer notwendig sind.

Jegliche Kombination aus den genannten Monomeren kann in beliebigen Mischungsverhältnissen eingesetzt werden. Einzige Voraussetzung ist nur deren Verträglichkeit. Insbesondere können auch solche Kombinationen gewählt werden, in denen die Monomere unterschiedliche Reaktivitäten aufweisen und somit Gradientencopolymere entstehen.

Die erfindungsgemäßen Pfropfmischpolymere können jegliche relative Mengen Olefin aufgepfropft auf dem Polyether enthalten. Bevorzugte Mengenverhältnisse variieren je nach Anwendung und liegen im Allgemeinen zwischen 10 und 10.000 Gew.-% der jeweils zugrunde liegenden Pfropfgrundlage.

Ein Stoff, der unter den Reaktionsbedingungen freie Radikale bildet, ist wesentliche Voraussetzung und Bestandteil des Pfropfvorgangs zur Herstellung der erfindungsgemäßen Pfropfmischpolymere. Alle Mittel, die prinzipiell geeignet sind, freie Radikale zu erzeugen, können eingesetzt werden, u.a. aber nicht ausschließlich, ionisierende Bestrahlung, organische Peroxyverbindungen, Azo-Verbindungen und anorganische Radikalbildner.

Zur besseren Dosierung oder Verträglichkeit der Radikalbildner können Lösungsmittel zum Einsatz kommen, die mit der radikalischen Polymerisation nicht interferieren.

Die für die Reaktion gewählte Temperatur hängt von der zum Einsatz kommenden radikalbildenden Verbindung ab. Wird die Radikalbildung thermisch induziert, spielt die Halbwertszeit des Zerfalls der Primärteilchen eine entscheidende Rolle und kann so gewählt werden, dass sich in der Reaktionsmischung immer ein gewünschtes Verhältnis von freien Radikalen einstellt. Geeignete Temperaturbereiche liegen zwischen 30 °C und 225 °C, nach oben begrenzt durch die thermische Zersetzung der Pfropfgrundlage.
Die Monomere M können unter Verwendung irgendeiner konventionellen synthetischen Methode homo- oder copolymerisiert werden. Beispielsweise können dies Lösungspolymerisation, Emulsionspolymerisation, umgekehrte Emulsionspolymerisation, Suspensionspolymerisation, umgekehrte Suspensionspolymerisation oder Fällungspolymerisation sein, ohne dass die verwendbaren Methoden darauf beschränkt sind. Die Pfropfreaktion kann in Gegenwart oder Abwesenheit von Lösungsmitteln erfolgen, wenn notwendig auch in Zwei- oder Mehrphasensystemen. Wichtige Voraussetzung ist lediglich die wechselseitige Löslichkeit der Reaktionspartner im Medium. Bei der Lösungspolymerisation kann Wasser, übliche organische Lösungsmittel oder die als Pfropfgrundlage eingesetzten Siliconderivate S selbst als Lösungsmittel verwendet werden. Dieses letzte Verfahren wird jedoch bevorzugt.

Die Pfropfreaktion kann unter Normaldruck, Überdruck, oder Unterdruck durchgeführt werden.

Die zur Herstellung der erfindungsgemäßen Mischpolymere P nach dem ersten Verfahren verwendeten Polyoxyalkylen-Polysiloxan-Blockpolymere schließen alle die Verbindungen ein, die aus einem Siliconanteil und einem Polyetheranteil bestehen, welche linear über die Endgruppen verknüpft sind, so dass (AB)ₙ-Strukturen entstehen.

Als Pfropfgrundlage geeignete Polyethersiloxane sind Strukturen der Formel (V) 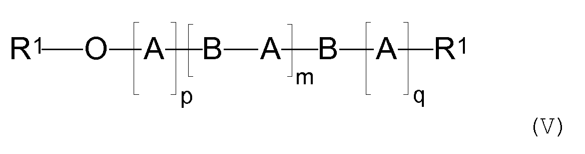 wobei der Rest
A ein Polyoxyalkylenblock der durchschnittlichen Formel (VI) ist,

   [(C₂H_{4-d}R'_{d}O)ₙ(CₓH₂ₓO)ᵣ(C₂H_{4-d}R"_{d}O)ₜ] (VI)

   wobei
   - d: 1 bis 3,
   - n: ≥ 0,
   - x: 2 bis 10,
   - r: ≥ 0,
   - t: ≥ 0,

   n + r + t ≥ 1,

   sind und
   - R': ein einwertiger aromatischer gegebenenfalls substituierter Kohlenwasserstoffrest,
   - R": ein Wasserstoffrest oder ein einwertiger Kohlenwasserstoffrest mit 1 bis 18 C-Atomen,
   - R¹: ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters ist,
B ein Polysiloxanblock der durchschnittlichen Formel (VII) ist, 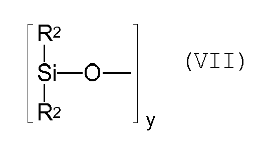 wobei
   - R²: gleich oder verschieden ist und einen Alkylrest mit 1 bis 4 Kohlenstoffatomen oder einen Phenylrest umfasst und
   - y: einen Wert von 5 bis 200,
   - m: einen Wert von 2 bis 100,
   - p: einen Wert von 0 oder 1 und
   - q: einen Wert von 0 oder 1,
   hat,
   oder der Formel (VIII) 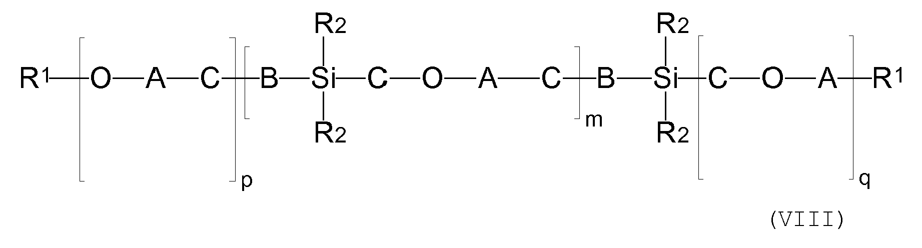 wobei die Reste R¹, A, B und m, p und q die oben genannte Bedeutung haben und
   C ein linearer oder verzweigter Alkylenrest mit 2 bis 20 Kohlenstoffatomen ist.
   Der Polyoxyalkylenblock A der allgemeinen Formeln (VI und VIII) kann dabei auch Mischungen verschiedener Polyoxyalkylenblöcke umfassen.
   Besonders bevorzugt sind solche Polyoxyalkylen-Polysiloxan-Blockmischpolymere, bei denen alle Reste R² Methylreste sind.
   Es ist dem Fachmann bekannt, dass die oben beschriebenen Polyoxyalkylen-Polysiloxan-Blockmischpolymere oft zusätzliche funktionelle und nicht funktionelle Gruppen aufweisen können, so lange diese nicht mit dem radikalischen Polymerisationsprozess interferieren können. Beispiele sind siliciumgebundene Acyloxygruppen (Acetoxygruppen), Hydroxylgruppen und/oder Alkoxygruppen (Methoxygruppen), aber auch Substituenten an den an Silicium gebundenen Kohlenwasserstoffgruppen, wie z. B. Halogenatome oder Alkoxygruppen.
   Die zur Herstellung der in Formel (VIII) beschriebenen Polyoxyalkylen-Polysiloxan-Blockmischpolymere benötigten Diallylpolyether werden ausgehend von einem Startalkohol, der bevorzugt Allylalkohol ist, durch Anlagerung von Monomeren gewonnen. Geeignete Monomere sind Ethylenoxid, Propylenoxid, Verbindungen aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen. Anschließend kann die endständige OH-Gruppe z.B. mit Allylchlorid oder Methallylchlorid zum gewünschten Diallylpolyether oder Allylmethallylpolyether umgesetzt werden. Es ist ebenso gut möglich auf andere Weisen, die dem Fachmann bekannt sind, Polyether mit zwei terminalen Doppelbindungen herzustellen.
   Die in der Formel (VIII) beschriebenen Polyoxyalkylen-Polysiloxan-Blockmischpolymere werden durch Umsetzung z. B. der so erhaltenen Diallylpolyether mit Polysiloxanen durch Addition an endständige SiH-Gruppen des Polysiloxans in Anwesenheit eines Hydrosilylierungskatalysators hergestellt. Nach dem Stand der Technik können Platin, Palladium oder Rhodium-Katalysatoren verwendet werden. Dabei wird nach dem Stand der Technik ein geringer Anteil an monofunktionellem Polyether oder monofunktionellem, terminalen Alken, oder eine Mischung aus monofunktionellen Polyethern und Alkenen beigemischt, um die Kettenlänge zu steuern.
   Die zur Herstellung der in Formel (V) beschriebenen Polyoxyalkylen-Polysiloxan-Blockmischpolymere benötigten dihydroxyfunktionellen Polyether werden aus einem dihydroxyfunktionellen Startalkohol oder Wasser, durch Anlagerung von Monomeren gewonnen. Geeignete Monomere sind Ethylenoxid, Propylenoxid, Verbindung aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.
   Die in der Formel (V) beschriebenen Polyoxyalkylen-Polysiloxan-Blockmischpolymere werden durch Umsetzung der so erhaltenen dihydroxyfunktionellen Polyether mit Polysiloxanen durch Kondensation mit endständigen SiH-Gruppen des Polysiloxans in Anwesenheit eines Kupplungskatalysators, nach dem Stand der Technik z.B. eines Borankats, oder durch die Umsetzung mit Polysiloxanen, welche endständige SiCl-Gruppen enthalten, hergestellt. Dabei wird nach dem Stand der Technik ein geringer Anteil an monofunktionellem Polyether oder monofunktionenellem Alkohol oder eine Mischung aus monofunktionellen Polyethern und Alkoholen beigemischt, um die Kettenlänge zu steuern.
   Die zur Herstellung der erfindungsgemäßen Mischpolymere P nach dem zweiten Verfahren verwendeten Polyether schließen alle die difunktionellen Polyether ein, die anschließend an den Pfropfvorgang mit α,ω-funktionellen Siloxanen linear so verknüpft werden können, dass (AB)ₙ-Strukturen entstehen.
   Eine Vielzahl geeigneter Polyetherderivate ist als Pfropfgrundlage verfügbar.
   Besonders geeignete Polyetherderivate B sind solche der allgemeinen Formel (IX),

   (F)_{q}(O(C₂H_{4-d}R'_{d}O)ₙ(CₓH₂ₓO)ᵣ(C₂H_{4-d}R"_{d}O)ₜF) (IX)

   mit der Bedeutung
   - d: 1 bis 3,
   - n: ≥ 0,
   - x: 2 bis 10,
   - r: ≥ 0,
   - t: ≥ 0,

   n + r + t ≥ 1,

   - F: ein H-Atom oder ein funktioneller gegebenenfalls verzweigter Kohlenwasserstoffrest mit 1 bis 18 C-Atomen,
   - R': ein einwertiger aromatischer, gegebenenfalls substituierter Kohlenwasserstoffrest,
   - R": ein Wasserstoffrest oder ein einwertiger Kohlenwasserstoffrest mit 1 bis 18 C-Atomen.

Besonders bevorzugt sind dihydroxyfunktionelle Polyether der allgemeinen Formel (X),

[HO (C₂H_{4-d}R'_{d}O)ₙ(CₓH₂ₓO)ᵣ(C₂H_{4-d}R"_{d}O)ₜH] (X)

wobei R', R", d, n, x, t und r die oben genannten Bedeutungen haben.

Die gepfropften, difunktionellen Polyether werden dann, gegebenenfalls nach weiterer chemischer Modifizierung, mit α,ω-difunktionellen Siloxanen nach den dem Fachmann bekannten Methoden zu den erfindungsgemäßen gepfropften linearen Polyethersiloxanmischpolymeren P umgesetzt. Besonders bevorzugt ist die Umsetzung von gepfropften dihydroxyfunktionellen Polyethern mit α,ω-SiH-Siloxanen oder α,ω-SiCl-Siloxanen.

Die dazu benötigten dihydroxyfunktionellen Polyether werden aus einem dihydroxyfunktionellen Startalkohol oder Wasser, durch Anlagerung von Monomeren gewonnen. Geeignete Monomere sind Ethylenoxid, Propylenoxid, Verbindungen aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

In den nachfolgenden Beispielen wird zunächst die Herstellung der erfindungsgemäß einzusetzenden Verbindungen beschrieben. Es folgen anwendungstechnische Beispiele zum Nachweis der Eigenschaften der erfindungsgemäßen Verbindungen und zum Vergleich dazu Eigenschaften, die mit bekannten Produkten des Standes der Technik erzielt werden können.

### Experimentelle Beispiele:

### Bezugsbeispiel 1:

### Herstellung eines dihydroxyfunktionellen Polyethers:

Ethylenoxid-/propylenoxidhaltiges Blockcopolymer (MW ≈ 5.400, 40 % EO-Anteil), hergestellt nach dem Stand der Technik. Bespielsweise wurden 45 g n-Butandiol und 7 g Kaliummethanolat in einem Druckreaktor vorgelegt und auf 100 °C aufgeheizt. Anschließend wurden 3.240 g Propylenoxid und danach 2.160 g Ethylenoxid über mehrere Stunden zudosiert und bei 100 °C eine Stunde nachreagiert. Nach Abkühlen auf 80 °C wurde das Reaktionsgemisch neutralisiert und abgefüllt.

### Bezugsbeispiel 2:

### Herstellung eines dihydroxyfunktionellen Polyethers:

Ethylenoxid-/propylenoxidhaltiges Blockcopolymer (MW = 6.500, 50 % EO-Anteil), hergestellt nach dem Stand der Technik. Bespielsweise wurden 1 mol H₂O und KOH in einem Druckreaktor vorgelegt und auf 100 °C aufgeheizt. Anschließend wurden 3.240 g Propylenoxid über mehrere Stunden und nach einer Nachreaktionszeit von 1 h 2.160 g Ethylenoxid über mehrere Stunden zudosiert. Nach einer weiteren Nachreaktionszeit von 1 h bei 100 °C und Abkühlen auf 80 °C wurde das Reaktionsgemisch neutralisiert und abgefüllt.

### Bezugsbeispiel 3:

### Herstellung eines Allylpolyethers (MW = 600, 70 % EO-Anteil):

Bespielsweise wurden 58 g Allylalkohol und KOH in einem Druckreaktor vorgelegt und auf 120 °C aufgeheizt. Anschließend wurden 120 g Styroloxid über mehrere Stunden und nach einer Nachreaktionszeit von 1 h 440 g Ethylenoxid bei 100 °C über mehrere Stunden zudosiert. Nach einer weiteren Nachreaktionszeit von 1 h bei 100 °C und Abkühlen auf 80 °C wurde das Reaktionsgemisch neutralisiert und abgefüllt.

### Bezugsbeispiel 4:

### Herstellung eines Allylpolyethers:

Ethylenoxid-/styroloxidhaltiges Blockcopolymer (MW = 600, 70 % EO-Anteil) hergestellt nach dem Stand der Technik. Bespielsweise wurden 58 g Allylalkohol und KOH in einem Druckreaktor vorgelegt und auf 100 °C aufgeheizt. Anschließend wurden über mehrere Stunden 440 g Ethylenoxid und nach einer Nachreaktionszeit von 1 h 120 g Styroloxid bei 120 °C über mehrere Stunden zudosiert. Nach einer weiteren Nachreaktionszeit von 1 h bei 120 °C und Abkühlen auf 80 °C wurde das Reaktionsgemisch neutralisiert und abgefüllt.

### Bezugsbeispiel 5:

### Herstellung eines Diallylpolyethers:

Der in Beispiel 4 hergestellte Allylpolyether (1 mol) wurde vorgelegt, entgast (Vakuum (10 bis 20 mbar) und mit Stickstoff belüftet.
Unter Eiskühlung wurde 1,5 mol kalte 50 %ige Natronlauge hinzugegeben, wobei die Temperatur 25 bis 30 °C nicht übersteigen durfte.
Danach wurde 1,7 mol Allylchlorid innerhalb von 90 min zugetropft. Die Reaktion war stark exotherm. Durch Regelung der Zutropfgeschwindigkeit wurde die Temperatur knapp unterhalb des Siedepunkts von Allylchlorid gehalten (< 45 °C). Es entstand eine schwachgelbe bis orangefarbene Suspension.
Nach Beendigung der Zugabe wurde eine Stunde unter Rückfluss erhitzt (60 °C). Danach wurde das nicht umgesetzte Allylchlorid bei 60 °C und einem Druck von 100 mbar abdestilliert. Die Suspension wurde filtriert.
Nach der Überführung in einen Scheidetrichter wurde die wässrige Phase abgetrennt und verworfen. Zur Entfernung während der Reaktion gebildeter, organischer Nebenprodukte wurde bei 60 °C und 20 mbar destilliert (60 min). Anschließend wurde über Natriumsulfat unter kräftigem Rühren (12 h) getrocknet und filtriert.
Man erhielt ein klares, gelbes bis orangefarbenes Produkt.

### Bezugsbeispiel 6 :

### Hydrosilylierung eines Polysiloxans:

In einem Dreihalskolben wurden 2,6 mol des in Beispiel 5 hergestellten Polyethers zusammen mit 3 mol eines α,ω-SiH-Siloxans (N = 50, SiH = 0,55) und 10 ppm Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtriert und abgefüllt.

### Bezugsbeispiel 7:

### Hydrosilylierung eines Polysiloxans:

In einem Dreihalskolben wurden 6,5 mol des in Beispiel 5 hergestellten Polyethers zusammen mit 7 mol eines seitenständigen-SiH-Siloxans (20,5/5, SiH = 2,52) und 10 ppm Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtriert und abgefüllt.

### Beispiel 1 (Verfahren 1):

### Umsetzung von einem (AB)ₙ-Polyethersiloxan mit Styrol unter Verwendung von Trigonox® 117 als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 20 g Styrol und 1,8 g Trigonox® 117 innerhalb von 60 Minuten zugetropft, wobei eine exotherme Reaktion beobachtet wird. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein farbloses, klares Produkt.

### Beispiel 2 (Verfahren 1):

### Umsetzung von einem (AB)ₙ-Polyethersiloxan mit Butylmethacrylat unter Verwendung von Trigonox® B als Initiator.

100 g Polyethersiloxan aus Bezugsbeispiel 7 wurden in einem Vierhalskolben ausgestattet mit Rührer, Intensivkühler, Thermometer und Tropftrichter unter Stickstoffatmosphäre auf 160 °C aufgeheizt. Bei Erreichen der Temperatur wurden 20 g Butylmethacrylat und 3,6 g Trigonox® B innerhalb von 60 Minuten zugetropft, wobei eine exotherme Reaktion beobachtet wird. Die Reaktionsmischung wurde daraufhin eine Stunde bei 160 °C gehalten. Anschließend wurden unter Verwendung einer Destillationsbrücke Restmonomere bei 145 °C und Ölpumpenvakuum abdestilliert. Man erhielt ein gelbliches, klares Produkt. Das 1H-NMR-Spektrum des Produktes zeigt, dass die benzylische Position am Polyether (δ = 4,7 bis 4,9 ppm) bevorzugt gepfropft wird.

### Beispiel 3 (Verfahren 1):

### Umsetzung von einem (AB)ₙ-Polyethersiloxan mit 2-Hydroxyethylmethacrylat unter Verwendung von Trigonox® D-C50 als Initiator.

100 g Polyethersiloxan aus Bezugsbeispiel 7 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 20 g 2-Hydroxyethylmethacrylat und 5,4 g Trigonox® 201 innerhalb von 60 Minuten zugetropft, wobei eine exotherme Reaktion beobachtet wird. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, klares Produkt.

### Beispiel 4 (Verfahren 1):

### Umsetzung von einem (AB)ₙ-Polyethersiloxan mit Methylacrylat und Methylmethacrylat unter Verwendung von Perkadox® 16 als Initiator.

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 82 °C aufgeheizt. Bei Erreichen der Temperatur wurden 20 g einer 1 : 1 Mischung aus Methylacrylat und Methylmethacrylat und 5,4 g Perkadox® 16 innerhalb von 60 Minuten zugetropft, wobei eine exotherme Reaktion beobachtet wird. Die Reaktionsmischung wurde daraufhin eine Stunde bei 100 °C gehalten. Anschließend wurden unter Verwendung einer Destillationsbrücke Restmonomere bei 150 °C und Ölpumpenvakuum abdestilliert. Man erhielt ein farbloses, klares Produkt.

### Beispiel 5 (Verfahren 1):

### Umsetzung von einem (AB)ₙ-Polyethersiloxan mit 2-Dimethylaminoethylmethacrylat unter Verwendung von Trigonox® 117 als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 120 °C aufgeheizt. Bei Erreichen der Temperatur wurden 20 g 2-Dimethylaminoethylmethacrylat und 2,5 g Trigonox® 117 innerhalb von 60 Minuten zugetropft, wobei eine exotherme Reaktion beobachtet wird. Die Reaktionsmischung wurde daraufhin eine Stunde bei 130 °C gehalten. Anschließend wurden unter Verwendung einer Destillationsbrücke Restmonomere bei 150 °C und Ölpumpenvakuum abdestilliert. Man erhielt ein gelbliches, klares Produkt.

### Beispiel 6 (Verfahren 1):

### Umsetzung von einem (AB)ₙ-Polyethersiloxan mit 2-Dimethylaminoethylmethacrylat und Methoxypolyethylenglycol 500 methacrylat unter Verwendung von Trigonox® 117 als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 120 °C aufgeheizt. Bei Erreichen der Temperatur wurden 20 g einer 1 : 1 Mischung aus 2-Dimethylaminoethylmethacrylat und Methoxypolyethylenglycol 500 methacrylat, sowie 2,5 g Trigonox® 117 innerhalb von 60 Minuten zugetropft, wobei eine exotherme Reaktion beobachtet wurde. Die Reaktionsmischung wurde daraufhin eine Stunde bei 130 °C gehalten. Anschließend wurden unter Verwendung einer Destillationsbrücke Restmonomere bei 150 °C und Ölpumpenvakuum abdestilliert. Man erhielt ein gelbliches, klares Produkt.

### Beispiel 7 (Verfahren 2) :

### Umsetzung eines Polyethers mit Methacrylat und Ethylhexylacrylat unter Verwendung von Trigonox® B als Initiator.

100 g Dihydroxypolyether aus Bezugsbeispiel 2 wurden in einem Vierhalskolben ausgestattet mit Rührer, Intensivkühler, Thermometer und Tropftrichter unter Stickstoffatmosphäre auf 82 °C aufgeheizt. Bei Erreichen der Temperatur wurden 20 g einer 1 : 2-mol-Mischung aus Methacrylat und Ethylhexylacrylat und 5,4 g Perkadox® 16 innerhalb von 60 Minuten zugetropft, wobei eine exotherme Reaktion beobachtet wurde. Die Reaktionsmischung wurde daraufhin eine Stunde bei 100 °C gehalten. Anschließend wurden unter Verwendung einer Destillationsbrücke Restmonomere bei 150 °C und Ölpumpenvakuum abdestilliert. Man erhielt ein farbloses, klares Produkt.

### Beispiel 8 (Verfahren 2):

### Herstellung eines (AB)ₙ-Polyethersiloxans:

In einem Dreihalskolben mit Rührer, Destillationsbrücke und Gaseinleitungsrohr wurden 712 g des gepfropften Polyethers aus Bezugsbeispiel 13 vorgelegt und mit der gleichen Menge Toluol versetzt. Nach dem Abdestillieren von ca. 200 g Toluol zur azeotropen Trocknung des Polyethers wurde auf 75 °C abgekühlt, die Destillationsbrücke gegen einen Tropftrichter ausgetauscht und innerhalb von 30 min 288 g eines α,ω-Dichlordimethylpolysiloxans (B) (Kettenlänge = 15) zugetropft. Nach einer Nachreaktionszeit von 1 h bei 80 °C wurde mit Ammoniak neutralisiert, vom Ammoniumchlorid filtriert und vom Lösemittel befreit.

Die hydrophilen weichmachenden Eigenschaften der Produkte aus den erfindungsgemäßen Beispielen wurden anwendungstechnisch an textilen Flächengebilden untersucht. Dabei wurden das Rücknetzvermögen (Hydrophilie) und der Weichgriff gemäß den folgenden Beschreibungen mit gepfropften Polyethersiloxanen, deren Polyethersiloxane kammartig aufgebaut sind und einem aus dem Markt bekanntem Produkt (Sandoperm® SE-1 der Firma Clariant) verglichen.

### Formulierungsbeispiele:

Dazu wurden die Produkte mit einem Propellerrührer bei 150 bis 200 U/min zu je 5 Teilen in jeweils 95 Teile Wasser bei Raumtemperatur eingerührt und anschließend mit Essigsäure auf pH 4 bis 5 eingestellt. Man erhält jeweils ein klares Produkt.

### Applikationsbeispiele:

Zur Überprüfung des Griffes sowie der Hydrophilie der vorliegenden Erfindung wurden aus nativen Fasern bestehende textile Flächengebilde mit folgendem Verfahren ausgerüstet:

### Foulardverfahren:

Zur Ausprüfung des Weichgriffs der jeweiligen Emulsionen wurde Baumwollwirkware (160 g/m²) und Baumwoll-Frottierware (400 g/m²) mit einer Flotte, die jeweils 80 g/l der entsprechenden Emulsion enthielt, foulardiert auf ca. 100 % Flottenaufnahme abgequetscht und bei 130 °C drei Minuten lang getrocknet.

Zur Ausprüfung der Hydrophilie wurden Baumwollwebware (200 g/m²) mit einer Flotte, die jeweils 200 g/l der entsprechenden Emulsion enthielt, foulardiert und auf ca. 100 % Flottenaufnahme abgequetscht und bei 130 °C drei Minuten lang getrocknet.

### Testmethoden:

### Griffbeurteilung:

Zur Beurteilung des Warengriffes wurde ein erfahrenes Team zusammengestellt, das die anonymisierten Griffmuster, der mit den Emulsionen ausgerüsteten Wirk- und Frottierwaren, mit Hilfe eines Handpanneltests bewertete. Bei den Griffmustern aus Maschenware wurde zusätzlich eine nicht offensichtlich gekennzeichnete unbehandelte Probe hinzugelegt.

### Prüfung der Hydrophilie (Rücknetzvermögen):

Zur Überprüfung der Hydrophilie wurde die an DIN 53924 angelehnte interne Prüfmethode zur Messung der Steighöhe von Wasser verwendet. Dabei wird das ausgerüstete Baumwolltestgewebe in jeweils fünf 25 cm lange und 1,5 cm breite Streifen geschnitten, mit einem wasserlöslichen Stift markiert und an einer Halterung senkrecht straff, aber ohne Spannung, befestigt. Die Halterung wird anschließend für fünf Minuten so in ein Wasserbecken gestellt, dass 2 cm der Streifen ins Wasser eintauchen. Nachdem die Halterung 10 Minuten außerhalb des Wasserbeckens gestanden hat, wird die Steighöhe in cm abgelesen und gegen den Blindwert (Steighöhe der unbehandelten Baumwollstreifen x cm = 100 %) bestimmt und in % vom Blindwert angegeben.

Die Testergebenisse bezüglich des Weichgriffs und der Hydrophilie sind in der nachstehenden Tabelle aufgeführt.

| Weichmacher | Rücknetzvermögen (%) | Weichgriff Frottier (max 30) | Weichgriff Wirkware (max 30) |
|---|---|---|---|
| Blindwert | 100 | 2 | 5 |
| Sandoperm® SE 1 | 91 | 23 | 23 |
| Produkt nach Beispiel 5 | 95 | 27 | 24 |
| Produkt nach Beispiel 6 | 97 | 23 | 21 |
| Produkt mit kammartigem Polyethersiloxan | 96 | 11 | 14 |

### Erläuterung:

Es resultiert ein weicher sehr flauschiger und seidiger Griff der mit den erfindungsgemäßen Produkten ausgerüsteten textilen Flächengebilde (Beispiel 5 + 6). Die Anforderungen des Marktes werden hierbei erreicht oder sogar noch übertroffen. Darüber hinaus wies die so ausgerüstete Ware eine hohe Sprungelastizität und verbesserte Entknitterungseigenschaften auf.

Eine deutliche Überlegenheit drückt sich hier im Vergleich mit Produkten auf Basis kammartiger Polyethersiloxane aus.

## Patentansprüche

1. Pfropfmischpolymerisate P, auf Basis von Polyoxyalkylen-Polysiloxan-Blockmischpolymeren S, der allgemeinen Formel (V) 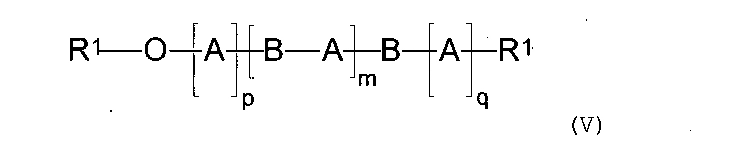 wobei der Rest
A ein Polyoxyalkylenblock der durchschnittlichen Formel (VI) ist,
[(C₂H₄-_{d}R'_{d}O)n(CₓH₂ₓO)r(C₂H₄-_{d}R"_{d}O)ₜ] (VI)
wobei
d 1 bis 3,
n ≥ 0,
x 2 bis 10,
r ≥ 0,
t ≥ 0,
n + r + t ≥ 1,
sind und
R' ein einwertiger aromatischer, gegebenenfalls substituierter Kohlenwasserstoffrest,
R" ein Wasserstoffrest oder ein einwertiger Kohlenwasserstoffrest mit 1 bis 18 C-Atomen,
R¹ ein H-Atom, ein einwertiger organischer linearer oder verzweigter Alkylrest mit der Kettenlänge C₁-C₄₀ oder ein Carboxyrest eines gegebenenfalls verzweigten Alkyl- oder Arylesters, ist,
B ein Polysiloxanblock der durchschnittlichen Formel (VII) ist, 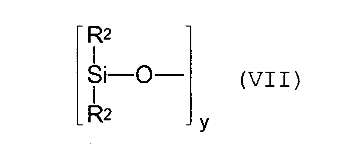 wobei
R² gleich oder verschieden ist und einen Alkylrest mit 1 bis 4 Kohlenstoffatomen oder einen Phenylrest umfasst und
y einen Wert von 5 bis 200,
m einen Wert von 2 bis 100,
p einen Wert von 0 bis 1 und
q einen Wert von 0 bis 1,
hat,
oder der Formel (VIII) 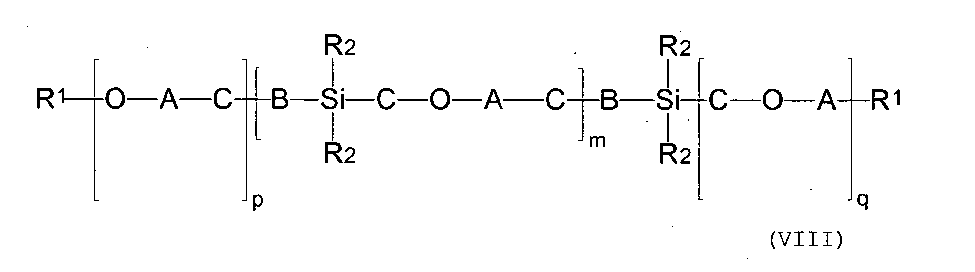 wobei die Reste R¹, A, B und m, p und q die oben genannte Bedeutung haben und C ein linearer oder verzweigter Alkylenrest mit 2 bis 20 Kohlenstoffatomen ist.

2. Pfropfmischpolymerisate P nach Anspruch 1, hergestellt durch radikalische Pfropf-Polymerisation von ethylenisch ungesättigten Monomeren M in Gegenwart von Polyoxyalkylen-Polysiloxan-Blockmischpolymeren der wie in Anspruch 1 definierten Formeln (V) oder (VIII).

3. Pfropfpolymerisate P nach Anspruch 2, **dadurch gekennzeichnet, dass** die radikalische Pfropfpolymerisation von ethylenisch ungesättigten Monomeren M in Gegenwart der dihydroxyfunktionellen Polyether PE der allgemeinen Formel (X)
[HO(C₂H_{4-d}R'_{d}O)ₙ(CₓH₂ₓO)ᵣ(C₂H_{4-d}R"_{d}O)ₜH] (X)
durchgeführt wird, wobei R', R", d, n, x, t und r die in Anspruch 1 bei der Beschreibung des Polyoxyalkylenblocks A genannten Bedeutungen haben.

4. Pfropfmischpolymerisate P nach Anspruch 2 oder 3, **dadurch gekennzeichnet, dass** die Menge der ethylenisch ungesättigten Monomere M in Bezug auf die blockweise aufgebauten Polyethersiloxane S zwischen 2 und 500 Gew.-%, bevorzugt 2 bis 200 Gew.-%, besonders bevorzugt 2 bis 100 Gew.-%, beträgt.

5. Pfropfmischpolymerisate P nach einem der Ansprüche 2 bis 4, **dadurch gekennzeichnet, dass** die Monomere M ausgewählt sind aus der Gruppe der Acrylsäure, Methacrylsäure, Vinylether, Vinylalkohole, Vinylester, Styrol, Methylstyrol, tert.-Butylstyrol, sowie deren Gemischen und Derivaten.

6. Pfropfmischpolymerisate P nach Anspruch 5, **dadurch gekennzeichnet, dass** sie Derivate der Acrylsäure und Methacrylsäure der allgemeinen Formel (I) umfassen,
X-C(O)CR⁷=CHR⁶ (I)
wobei
X ausgewählt ist aus der Gruppe der Reste OH, OL, OR⁸, NH₂, NHR⁸, N(R⁸)₂,
R⁷ und R⁶ unabhängig voneinander ausgewählt sind aus der Gruppe bestehend aus -H, C₁-C₈-linear- oder verzweigtkettige Alkylketten, Methoxy, Ethoxy, 2-Hydroxyethoxy, 2-Methoxyethoxy und 2-Ethoxyethyl,
R⁸ C₁-C₄₀-lineare, C₃-C₄₀-verzweigtkettige, aromatische oder C₃-C₄₀-carbocyclische Alkylreste, C₆-C₁₂-mehrfach-funktionelle Alkohole mit 2 bis 10 Hydroxylgruppen wie Ethylenglycol, Hexylenglycol, Glycerin und 1,2,6-Hexantriol, Alkoholether wie Methoxyethanol und Ethoxyethanol oder Polyethylenglykole sind,
L ein Kation ausgewählt aus der Gruppe bestehend aus Na⁺, K⁺, Mg²⁺, Ca²⁺, Zn²⁺, NH₄⁺, Alkylammonium, Dialkylammonium, Trialkylammonium, Tetraalkylammonium und analoge Phosphorammoniumderivate, ist.

7. Pfropfmischpolymerisate P nach Anspruch 5 oder 6, **dadurch gekennzeichnet, dass** die Monomeren M ausgewählt sind aus der Gruppe der Vinyl- und Allylester von C₁-C₄₀-linearen, C₃-C₄₀-verzweigtkettigen oder C₃-C₄₀-carbocyclischen Carbonsäuren, insbesondere Vinylacetat, Vinylpropionat, Vinylneononanoat, Vinylneoundekansäure oder *t*-Butyl-benzoesäurevinylester, Vinyl- oder Allylhalogenide sowie aus Mischungen dieser Monomere.

8. Pfropfmischpolymerisate P nach den Ansprüchen 2 bis 7, **dadurch gekennzeichnet, dass** die Monomeren M ausgewählt sind aus der Gruppe der stickstoffhaltigen Monomere.

9. Pfropfmischpolymerisate P nach Anspruch 8, **dadurch gekennzeichnet, dass** die Monomere M N,N-Dialkylaminoalkylacrylate und -methacrylate und N-Dialkylaminoalkylacryl- und -Methacrylamide der allgemeinen Formel (II) umfassen, 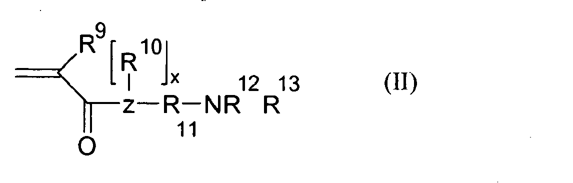 wobei
R⁹ H, Alkyl mit 1 bis 8 C-Atomen,
R¹⁰ H, Methyl,
R¹¹ Alkylen mit 1 bis 24 C-Atomen, optional substituiert durch Alkyl,
R¹², R¹³ C₁-C₄₀-Alkylrest,
Z Stickstoff für x = 1 oder Sauerstoff für x = 0,
ist.

10. Pfropfmischpolymerisate P nach Anspruch 8, **dadurch gekennzeichnet, dass** die Monomere M N-Vinylimidazole der allgemeinen Formel (III) umfassen, 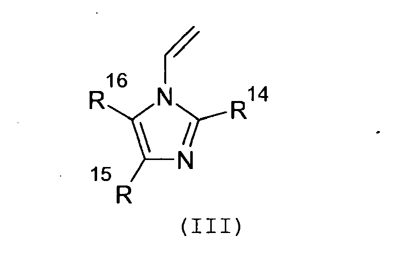 worin
R¹⁴ bis R¹⁶ unabhängig voneinander für Wasserstoff, C₁-C₈-Alkyl oder Phenyl steht.

11. Pfropfmischpolymerisate P nach den Ansprüchen 8 bis 10, **dadurch gekennzeichnet, dass** die ungesättigten, stickstoffhaltigen Monomere vor oder nach der Polymerisation quaternisiert sind.

12. Pfropfmischpolymerisate P gemäß einem der Ansprüche 1 bis 11, **dadurch gekennzeichnet, dass** in der Formel (VI) d = 1, R = Phenyl und 1 ≥ n < 15 bedeuten.

13. Pfropfmischpolymerisate P nach den Ansprüchen 1 bis 12, dadurch erhältlich, dass man Initiatoren einsetzt, die sauerstoffzentrierte Radikale bilden.

14. Verwendung der gepfropften Polyoxyalkylen-Polysiloxan-Blockmischpolymere P gemäß den Ansprüchen 1 bis 13 als hydrophiler Weichmacher für textile Flächengebilde, Nonwovens und/oder Fasern aus natürlichen und/oder synthetischen Rohstoffen.

15. Verwendung gemäß Anspruch 14 als Weichmacher in Textilanwendungen, insbesondere für Baumwollgewebe in Konzentrationen von 0,01 bis 20 Gew.-% bezogen auf das Lösungs- oder Dispergiermittel, insbesondere Wasser.

## Claims

1. Graft copolymers P based on polyoxyalkylene-polysiloxane block copolymers S of the general formula (V) 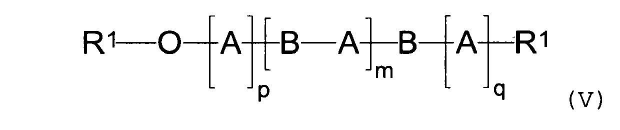 where the radical
A is a polyoxyalkylene block of the average formula (VI),
[(C₂H_{4-d}R'_{d}O)ₙ(CₓH2ₓO)ᵣ(C₂H_{4-d}R"_{d}O)ₜ] (VI)
where
d is from 1 to 3,
n is ≥ 0,
x is from 2 to 10,
r is ≥ 0,
t is ≥ 0,
n + r + t is ≥ 1,
and
R' is a monovalent aromatic, optionally substituted hydrocarbon radical,
R" is a hydrogen radical or a monovalent hydrocarbon radical having from 1 to 18 carbon atoms,
R¹ is a hydrogen atom, a monovalent organic linear or branched alkyl radical of chain length C₁-C₄₀ or a carboxyl radical of an optionally branched alkyl or aryl ester,
B is a polysiloxane block of the average formula (VII), 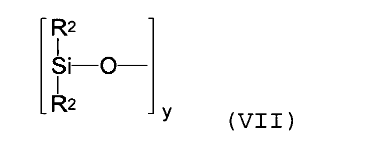 where
R² is the same or different and comprises an alkyl radical having from 1 to 4 carbon atoms or a phenyl radical and
y is from 5 to 200,
m is from 2 to 100,
p is from 0 to 1 and
q is from 0 to 1,
or of the formula (VIII) 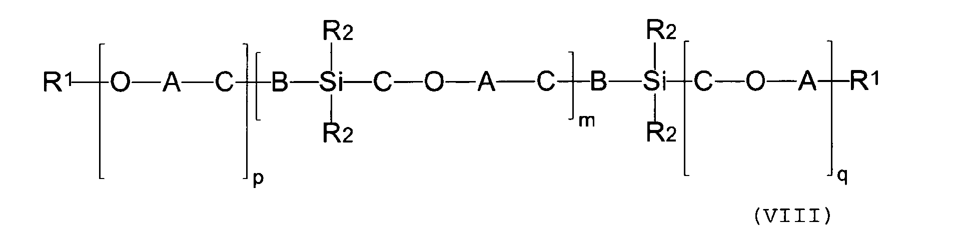 where the R¹, A, B radicals and m, p and q are each as defined above and C is a linear or branched alkylene radical having from 2 to 20 carbon atoms.

2. Graft copolymers P according to Claim 1, prepared by free-radical graft polymerization of ethylenically unsaturated monomers M in the presence of polyoxyalkylene-polysiloxane block copolymers of the formulae (V) or (VIII) as defined in Claim 1.

3. Graft polymers P according to Claim 2, **characterized in that** the free-radical graft polymerization of ethylenically unsaturated monomers M is carried out in the presence of the dihydroxy-functional polyethers PE of the general formula (X)
[HO(C₂H_{4-d}R'_{d}O)ₙ(CₓH₂ₓO)ᵣ(C₂H_{4-d}R"_{d}O)ₜH] (X)
where R', R", d, n, x, t and r are each as defined in Claim 1 in the description of the polyoxyalkylene block A.

4. Graft copolymers P according to Claim 2 or 3, **characterized in that** the amount of ethylenically unsaturated monomers M in relation to the polyether siloxanes S with a blockwise structure is between 2 and 500% by weight, preferably 2 to 200% by weight, more preferably from 2 to 100% by weight.

5. Graft copolymers P according to any one of Claims 2 to 4, **characterized in that** the monomers M are selected from the group of acrylic acid, methacrylic acid, vinyl ethers, vinyl alcohols, vinyl esters, styrene, methylstyrene, tert-butylstyrene, and mixtures and derivatives thereof.

6. Graft copolymers P according to Claim 5, **characterized in that** they include derivatives of acrylic acid and methacrylic acid of the general formula (I),
X-C(O)CR⁷=CHR⁶ (I)
where
X is selected from the group of the OH, OL, OR⁸, NH₂, NHR⁸, N(R⁸)₂ radicals,
R⁷ and R⁶ are each independently selected from the group consisting of -H, C₁-C₈ linear or branched alkyl chains, methoxy, ethoxy, 2-hydroxyethoxy, 2-methoxyethoxy and 2-ethoxyethyl,
R⁸ are C₁-C₄₀ linear, C₃-C₄₀ branched-chain, aromatic or C₃-C₄₀ carbocyclic alkyl radicals, C₆-C₁₂ polyfunctional alcohols having from 2 to 10 hydroxyl groups, such as ethylene glycol, hexylene glycol, glycerol and 1,2,6-hexanetriol, alcohol ethers such as methoxyethanol and ethoxyethanol, or polyethylene glycols,
L is a cation selected from the group consisting of Na⁺, K⁺, Mg²⁺, Ca²⁺, Zn²⁺, NH₄⁺, alkylammonium, dialkylammonium, trialkylammonium, tetraalkylammonium and analogous phosphorus ammonium derivatives.

7. Graft copolymers P according to Claim 5 or 6, **characterized in that** the monomers M are selected from the group of the vinyl and allyl esters of C₁-C₄₀ linear, C₃-C₄₀ branched-chain or C₃-C₄₀ carbocyclic carboxylic acids, especially vinyl acetate, vinyl propionate, vinyl neononanoate, vinyl neoundecanoate or vinyl t-butyl-benzoate, vinyl or allyl halides, and from mixtures of these monomers.

8. Graft copolymers P according to Claims 2 to 7, **characterized in that** the monomers M are selected from the group of the nitrogen-containing monomers.

9. Graft copolymers P according to Claim 8, **characterized in that** the monomers M include N,N-dialkylaminoalkyl acrylates and methacrylates and N-dialkylaminoalkylacrylamides and -methacrylamides of the general formula (II), 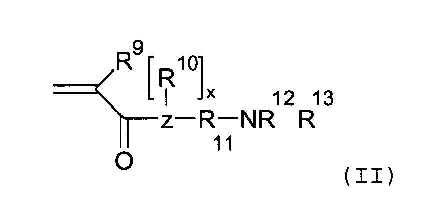 where
R⁹ is H, alkyl having from 1 to 8 carbon atoms,
R¹⁰ is H, methyl,
R¹¹ is alkylene having from 1 to 24 carbon atoms, optionally substituted by alkyl,
R¹², R¹³ are a C₁-C₄₀ alkyl radical,
Z is nitrogen when x = 1, or oxygen when x = 0.

10. Graft copolymers P according to Claim 8, **characterized in that** the monomers M include N-vinylimidazoles of the general formula (III), 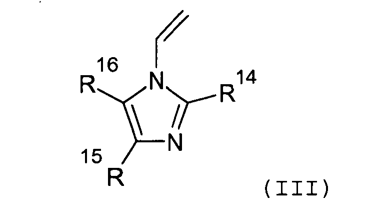 in which
R¹⁴ to R¹⁶ are each independently hydrogen, C₁-C₈ alkyl or phenyl.

11. Graft copolymers P according to Claims 8 to 10, **characterized in that** the unsaturated nitrogen-containing monomers are quaternized before or after the polymerization.

12. Graft copolymers P according to one of Claims 1 to 11, **characterized in that**, in the formula (VI), d = 1, R = phenyl and 1 ≥ n < 15.

13. Graft copolymers P according to Claims 1 to 12, obtainable by using initiators which form oxygen-centered free radicals.

14. Use of the grafted polyoxyalkylene-polysiloxane block copolymers P according to Claims 1 to 13 as hydrophilic softeners for textile fabrics, nonwovens and/or fibers formed from synthetic and/or natural raw materials.

15. Use according to Claim 14 as softeners in textile applications, especially for cotton fabric in concentrations of from 0.01 to 20% by weight, based on the solvent or dispersant, especially water.

## Revendications

1. Copolymères greffés P, à base de copolymères à blocs de polyoxyalkylène-polysiloxane S, de formule générale (V) 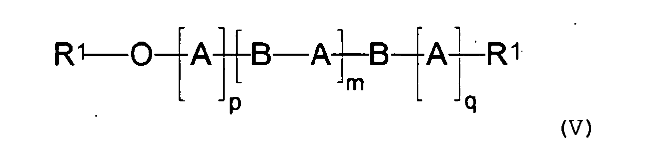 dans laquelle le radical
A représente un bloc polyoxyalkylène de formule moyenne (VI),
[(C₂H_{4-d}R'_{d}O)ₙ(CₓH₂ₓO)ᵣ(C₂H_{4-d}R^{"}_{d}O)ₜ] (VI)
où
d vaut 1 à 3,
n ≥ 0,
x vaut 2 à 10,
r ≥ 0,
t ≥ 0,
n + r + t ≥ 1,
et
R' représente un radical hydrocarboné monovalent, aromatique, le cas échéant substitué,
R" représente un radical hydrogène ou un radical hydrocarboné monovalent comprenant 1 à 18 atomes de carbone,
R¹ représente un atome d'hydrogène, un radical organique monovalent, alkyle linéaire ou ramifié présentant une longueur de chaîne de C₁-C₄₀ ou un radical carboxy d'un ester d'alkyle le cas échéant ramifié ou d'aryle,
B représente un bloc polysiloxane de formule moyenne (VII), 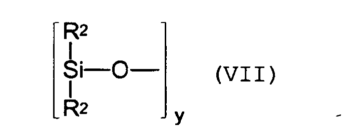 où
R² est identique ou différent et représente un radical alkyle comprenant 1 à 4 atomes de carbone ou un radical phényle,
y représente une valeur de 5 à 200,
m représente une valeur de 2 à 100,
p représente une valeur de 0 à 1 et
q représente une valeur de 0 à 1,
ou de formule (VIII) 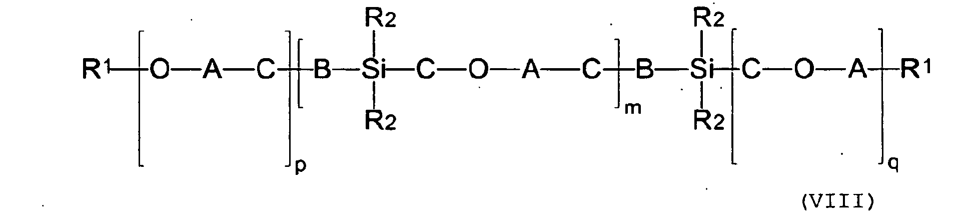 où les radicaux R¹, A, B et m, p et q ont la signification susmentionnée et C représente un radical alkylène linéaire ou ramifié, comprenant 2 à 20 atomes de carbone.

2. Copolymères greffés P selon la revendication ) 1, préparés par copolymérisation de greffage radicalaire de monomères M éthyléniquement insaturés en présence de copolymères à blocs de polyoxyalkylène-polysiloxane des formules (V) ou (VIII) définies dans la revendication 1.

3. Polymères greffés P selon la revendication 2, **caractérisés en ce que** la polymérisation de greffage radicalaire de monomères éthyléniquement insaturés M est réalisée en présence des polyéthers à fonctionnalité dihydroxy PE de formule générale (X)
[HO(C₂H_{4-d}R'_{d}O)ₙ(CₓH₂ₓO)ᵣ(C₂H_{4-d}R^{"}_{d}O)ₜH] (X)
où R', R", d, n, x, t et r présentent les significations mentionnées dans la revendication 1 dans la description du bloc de polyoxyalkylène A.

4. Copolymères greffés P selon la revendication 2 ou 3, **caractérisés en ce que** la quantité de monomères M éthyléniquement insaturés par rapport aux polyéthersiloxanes S à structure en blocs est comprise entre 2 et 500% en poids, de préférence de 2 à 200% en poids, de manière particulièrement préférée de 2 à 100% en poids.

5. Copolymères greffés P selon l'une quelconque des revendications 2 à 4, **caractérisés en ce que** les monomères M sont choisis dans le groupe formé par l'acide acrylique, l'acide méthacrylique, les vinyléthers, les alcools vinyliques, les esters de vinyle, le styrène, le méthylstyrène, le tert-butylstyrène, ainsi que leurs mélanges et dérivés.

6. Copolymères greffés P selon la revendication 5, **caractérisés en ce qu'**ils comprennent des dérivés de l'acide acrylique et de l'acide méthacrylique de formule générale (I),
X-C(O)CR⁷=CHR⁶ (I)
où
X est choisi dans le groupe des radicaux OH, OL, OR⁸, NH₂, NHR⁸, N(R⁸)₂,
R⁷ et R⁶ sont choisis, indépendamment l'un de l'autre, dans le groupe constitué par -H, les chaînes alkyle linéaires ou ramifiées en C₁-C₈, méthoxy, éthoxy, 2-hydroxyéthoxy, 2-méthoxyéthoxy et 2-éthoxyéthyle,
R⁸ représentent des radicaux alkyle linéaires en C₁-C₄₀, à chaîne ramifiée en C₃-C₄₀, aromatiques ou carbocycliques en C₃-C₄₀, des alcools polyfonctionnels en C₆-C₁₂ comprenant 2 à 10 groupes hydroxyle tels que l'éthylèneglycol, l'hexylèneglycol, le glycérol et le 1,2,6-hexanetriol, les alcooléthers tels que le méthoxyéthanol et l'éthoxyéthanol ou les polyéthylèneglycols,
L représente un cation choisi dans le groupe constitué par Na⁺, K⁺, Mg²⁺, Ca²⁺, Zn²⁺, NH₄⁺, alkylammonium, dialkylammonium, trialkylammonium, tétraalkylammonium et les dérivés analogues de phosphorammonium.

7. Copolymères greffés P selon la revendication 5 ou 6, **caractérisés en ce que** les monomères M sont choisis dans le groupe des esters vinyliques et allyliques d'acides carboxyliques linéaires en C₁-C₄₀, à chaîne ramifiée en C₃-C₄₀ ou carbocycliques en C₃-C₄₀, en particulier l'acétate de vinyle, le propionate de vinyle, le néononanoate de vinyle, l'acide vinylnéoundécanoïque ou l'ester vinylique de l'acide t-butylbenzoïque, les halogénures de vinyle ou d'allyle ainsi que les mélanges de ces monomères.

8. Copolymères greffés P selon les revendications 2 à 7, **caractérisés en ce que** les monomères M sont choisis dans le groupe des monomères contenant de l'azote.

9. Copolymères greffés P selon la revendication 8, **caractérisés en ce que** les monomères M comprennent des acrylates et des méthacrylates de N,N-dialkylaminoalkyle et des N-dialkylaminoalkylacrylamides et des N-dialkylaminoalkylméthacrylamides de formule générale (II), 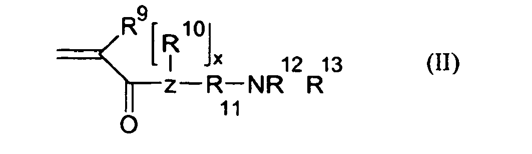 où
R⁹ représente H, alkyle comprenant 1 à 8 atomes de carbone,
R¹⁰ représente H, méthyle,
R¹¹ représente alkylène comprenant 1 à 24 atomes de carbone, éventuellement substitué par alkyle,
R¹², R¹³ représente un radical alkyle en C₁-C₄₀,
Z représente azote pour x = 1 ou oxygène pour x = 0.

10. Copolymères greffés P selon la revendication 8, **caractérisés en ce que** les monomères M comprennent des N-vinylimidazoles de formule générale (III), 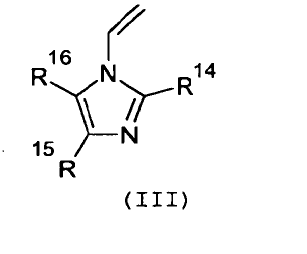 où
R¹⁴ à R¹⁶ représentent, indépendamment l'un de l'autre, hydrogène, alkyle en C₁-C₈ ou phényle.

11. Copolymères greffés P selon les ) revendications 8 à 10, **caractérisés en ce que** les monomères insaturés, contenant de l'azote sont quaternisés avant ou après la polymérisation.

12. Copolymères greffés P selon l'une quelconque des revendications 1 à 11, **caractérisés en ce que** dans la formule (VI) d = 1, R = phényle et 1 ≥ n < 15.

13. Copolymères greffés P selon les revendications ) 1 à 12, pouvant être obtenus en ce qu'on utilise des initiateurs qui forment des radicaux centrés sur l'oxygène.

14. Utilisation des copolymères P à blocs greffés de polyoxyalkylène-polysiloxane selon les revendications 1 à 13 comme assouplissant hydrophile pour des structures planes textiles, des non-tissés et/ou des fibres en matières premières naturelles et/ou synthétiques.

15. Utilisation selon la revendication 14 comme assouplissant dans les utilisations textiles, en particulier pour les tissus en coton en des concentrations de 0,01 à 20% en poids par rapport au solvant ou dispersant, en particulier l'eau.
